# EUROPEAN PATENT APPLICATION

(11) **EP 2 336 838 A1**
(43) Date of publication of application: **22.06.2011**
(21) Application number: 09015462.6
(22) Date of filing: 15.12.2009
(51) Int. Cl.: G05B 19/402, G03F 7/20

(54) **Method and control device for aligning a stage in an electro chemical pattern reproduction process**

(71) Applicant: Robert Bosch GmbH, 70469 Stuttgart (DE)
(72) Inventor: van der Kruk, Robbert, 5551 MR Valkenswaard (NL); Dam Ten, Thjis, 5613 Eindhoven (NL)
(74) Representative: Thürer, Andreas

(57) **Abstract**

What is proposed is a method for aligning a stage in an Electro Chemical Pattern Reproduction (ECPR) process. Sensor signals (103) are received via an interface, wherein the sensor signals represent a current position of the stage (133) in sensor coordinates. A predefined position (111) of a center of gravity of the stage is provided and a current position (109) of the center of gravity of the stage is determined. The predefined and the current position of the center of gravity are compared to determine error signals (113). Based on a transformation of the error signals into actuator coordinates, actuator signals (127) are determined, wherein the actuator signals are suitable to actuate actuators (129) of the stage such that the center of gravity of the stage moves to the predefined position (137). The actuator signals are provided at an interface to the actuators.

## Description

The present invention relates to a method for aligning a stage in an Electro Chemical Pattern Reproduction process and to a control device employing the method.

In the Electro Chemical Pattern Reproduction process (ECPR process) a master is aligned to a wafer. A stage can be used for supporting the master. A stage design, including controls based on process specifications, is needed. Conventional Gantry and traditional control are not sufficient.

Single input, single output (SISO) control has no solution to create a stable system, in the sense of bounded input bounded output, for a mechanical stage with all axes actuating in one plane. It is over determined whereby continuing varying currents and motion is created. The one plane stage is needed to achieve an accurate and cost effective solution. Thus known solutions suffer from a loss of accuracy and higher forces.

On this background, the present invention serves to present a method for aligning a stage in an ECPR process, a control device for aligning a stage in an ECPR process and an ECPR system according to the independent claims. Advantageous embodiments result from the respective dependent claims and the subsequent description.

The present invention relates to stages for ECPR processes. The ECPR process requires accurate stage control in x, y and rotation directions, with an accuracy of x, y < 50 nm. This requirement can be realized with three or four actuators and sensors in one plane. In both cases a measurement of stage positions needs coordinate transformations from sensor coordinates to x, y, theta coordinates, and from x, y, theta coordinates to actuators coordinates. Thus, stage coordinates are equal to x,y,theta coordinates which are carthesian coordinates, with theta being a rotation around the z-axis and x and y defining movements along the x and y axes. Special feed forward compensation is needed to deal with ECPR specific processes such as cables with fluids and other forces actuating on the stage.

According to the invention, a controller algorithm is created which stabilizes the stage and reaches desired accuracies and settling times. By the inventive method of stage control to align a wafer to a master, the required position accuracy can be achieved and a cost effective mechanical design is allowed.

The inventive approach can be approved by additional software tooling for diagnostics and tuning. Software tooling makes it possible to trace time and frequency signals in real time

The present invention provides a method for aligning a stage in an Electro Chemical Pattern Reproduction (ECPR) process, comprising the steps of: receiving sensor signals via an interface, wherein the sensor signals represent a current position of the stage in sensor coordinates; providing a predefined position of a center of gravity of the stage; determining a current position of the center of gravity of the stage, based on the sensor signals; comparing the predefined position and the current position of the center of gravity to determine error signals, wherein the error signals define a deviation between the predefined position and the current position; determining actuator signals, based on a transformation of the error signals into actuator coordinates, wherein the actuator signals are suitable to actuate actuators of the stage such that the center of gravity of the stage moves to the predefined position; and providing the actuator signals at an interface to the actuators.

The stage may comprise a chuck for carrying a master of the ECPR process. The stage may be used to arrange and align the master on a substrate, like a granite stone. The sensor signals may be provided by sensors being configured to measure an actual position of the stage. The sensors may be arranged on the stage. The sensor signals may represent the coordinates of the actual position of the stage. The predefined position may be a setpoint which may be stored in a memory device or may be provided via an interface. The error signals may represent difference values which define the deviation between the actual and the predefined position of the center of gravity of the stage. The error signals may be further transformed in order to be suitable for controlling the actuators. The actuators may comprise motors for moving and aligning the stage.

Thus, core of the present invention are coordinate transformations, such that a position of the center of gravity is measured and motor forces are actuating in the centre of gravity of the mechanism. The benefits of this approach are accuracy and a cost effective stage design.

The sensor signals may be provided by four sensors, each sensor being arranged at a different edge of the stage. Thus, current coordinates of the outline of the stage can be measured and provided by the sensors. The sensors can be used to measure the position of the stage, for example in relation to the substrate. The sensors may use their own sensor coordinate system and the position data provided by the sensor signals may be defined in sensor coordinates.

The sensor coordinates may be Cartesian coordinates. Thus, the sensors may be configured to provide two x-coordinates of two opposed edges of the stage and two y-coordinates of two further opposed edges of the stage.

The inventive method may comprise a step of providing a predefined position setpoint, a predefined velocity setpoint, a predefined acceleration setpoint and a predefined jerk setpoint, and wherein the error signals are combined with the position setpoint. According to an embodiment the error signals are further determined by using three independent Proportional Integrated/Derivated (PID) controllers. The PID controllers may comprise additional notch filters and a lowpass filter, each.

The actuator signals may be provided to four actuators, each actuator being arranged at a different edge of the stage. The actuator signals may be configured to control the actuators. The actuator signals may be configured to move the stage within an actuator coordinate system. The actuators may be coupled to the stage or arranged on the stage. The actuators may use their own actuator coordinate system and the data provided by the actuator signals may be defined in actuator coordinates.

The actuator coordinates may be Cartesian coordinates. Thus the coordinate system of the actuators may be the same as the coordinate system of the sensors.

The actuator signals may comprise currents for actuating the actuators. Forces created by the actuators for moving the stage may be controlled by the currents.

According to an embodiment, the sensors and actuators may be arranged within a single plane.

The present invention further provides a control device for aligning a stage in an Electro Chemical Pattern Reproduction (ECPR) process, comprising: an input interface for receiving sensor signals, wherein the sensor signals represent a current position of the stage in sensor coordinates; means for providing a predefined position of a center of gravity of the stage; means for determining a current position of the center of gravity of the stage, based on the sensor signals; means for comparing the predefined position and the current position of the center of gravity to determine error signals in, wherein the error signals define a difference between the predefined position and the current position; means for determining actuator signals, based on a transformation of the error signals into actuator coordinates, wherein the actuator signals are suitable to actuate actuators of the stage such that the center of gravity of the stage moves to the predefined position; and an output interface for providing the actuator signals to the actuators.

The control device may be part of a motion controller.

According to an embodiment, the means for comparing may comprise notch filters to further determine the error signals. The notch filters may be part of Proportional Integrated/Derivated (PID) controllers.

The control device may comprise a plurality of control modes and means for control mode switching during and before landing of the stage. The control modes may concern the landing and rising of the airbearing.

Further, the control device may comprise feedforward compensation means being configured to compensate static forces, from leaf springs and hoses.

The present invention further provides an Electro Chemical Pattern Reproduction system, comprising: a stage for carrying a master of the Electro Chemical Pattern Reproduction system; four sensors, each sensor being arranged at a different edge of the stage, the sensors being configured to provide sensor signals representing a current position of the stage in sensor coordinates; four actuators, each actuator being arranged at a different edge of the stage, the actuators being configured to receive actuator signals and to move the stage based on the actuator signals; and an inventive control device, the control device being configured to receive the sensor signals and to provide the actuator signals.

In the following, the invention is exemplarily discussed in further detail by means of the accompanying drawings, in which:
- Fig. 1: shows a flow chart of an embodiment of the present invention; and
- Fig. 2: shows a flow chart of decentralized control scheme.

In the figures below, like or similar elements may be provided with like or similar reference numbers, with a repeated description being dispensed with. In addition, the figures of the drawings, the description thereof as well as the claims include numerous features in combination. A person skilled in the art clearly understands that these features may also be regarded individually or that they may be combined to form further combinations that are not explicitly described herein.

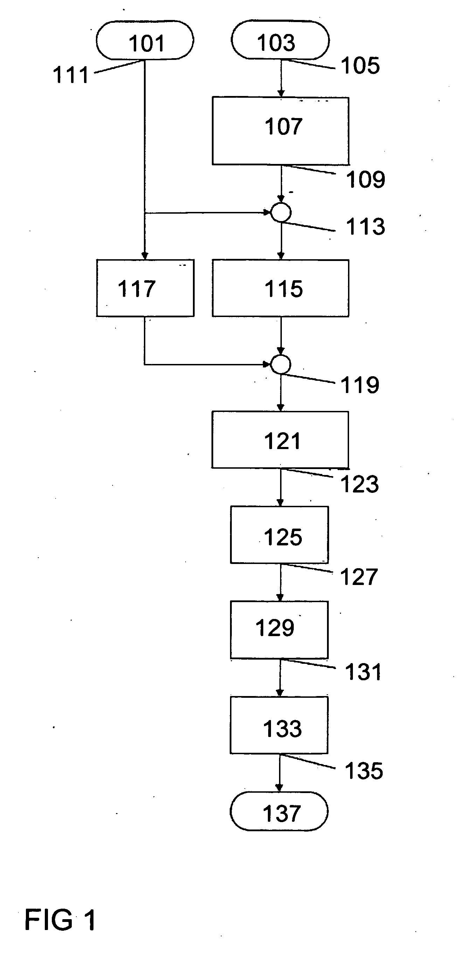

Fig. 1 shows a flowchart of a control algorithm for aligning a stage in an Electro Chemical Pattern Reproduction (ECPR) process, according to an embodiment of the present invention.

In particular, predefined setpoints 101 and actual sensor signals 103 from the stage are provided. The sensor signals 103 comprise position signals 105. The position signals 105 may be defined in sensor coordinates or Cartesian coordinates and comprise X1, Y1, X2, Y2 values, which may correspond to positions of the edges of the stage. In a step 107 the position signals 105 at four sensor positions are decoupled into Cartesian coordinates of the center of gravity of the stage and further position signals 109 which comprise X, Y and Theta values are provided. Thus, the position signals 105 being defined in sensor coordinates or Cartesian coordinates are transformed into the further position signals 109.

Setpoints 111 being based on the setpoints 101 may comprise a position setpoint, a velocity setpoint, an acceleration setpoint and a jerk setpoint, which may comprise X, Y, Theta values. A third order setpoint is provided so that the position profile is smooth enough to meet the required settling times.

The setpoints 111 may be combined with the further position signals 109 in order to create error signals 113, which comprise X,Y and Theta values. The error signals 113 are provided to a decentralized control 115 realized by three independent standard PID controllers. The setpoints 111 are further provided to acceleration and position dependent feed forward means 117. An output of the decentralized control 115 and an output of the means 117 are combined in order to create desired current signals 119 which may comprise X,Y and Theta values.

In a step 121 a current at the center of gravity of the stage is decoupled into currents at four actuator positions. At this moment, current is still a digital signal referring to the desired electrical current.

Thus, further desired current signals 123 are created, which may be defined in actuator coordinates or Cartesian coordinates and comprise X1, Y1, X2, Y2 values. Thus, the desired current signals 119 are transformed into the further desired current signals 123 being defined in actuator coordinates or Cartesian coordinates. By use of a current control and amplifier 125, the further desired current signals 123 may be transferred into actual current signals 127 which may be defined in actuator coordinates or Cartesian coordinates and comprise X1, Y1, X2, Y2 values. The actual current signals 127 are provided to actuators 129 which provide forces 131 in directions being defined by actuator coordinates or Cartesian coordinates and comprise X1, Y1, X2, Y2 values. The forces 131 are suitable to move the stage 133. A stage position, velocity, acceleration and jerk 135 may comprise X, Y and Theta values. Thus, the stage 133 is moved into a stage position 137. The stage position 137 can be equal to the predefined position setpoint 111.

According to this embodiment, the stage 133 consists of four sensors and four actuators 129 (X1, Y1, X2, Y2) at the edge of the stage. For dynamical reasons it is desired to measure the position and actuate the center of gravity (COG) of the stage (X, Y, Theta). Therefore, the sensor signals 103 of the four encoders are used to determine the X, Y and Theta position 109 of the COG of the stage. On basis of the desired setpoints 111, error signals 113 are determined and desired currents 123 for each direction are calculated on basis of three independent PID controllers 113 with notch and lowpass filters. Moreover, feed forward signals are added on basis of desired position and acceleration 117. These currents are determined to actuate the center of gravity of the stage. Therefore, these currents are decoupled to obtain currents for the four actuators at the side of the stage.

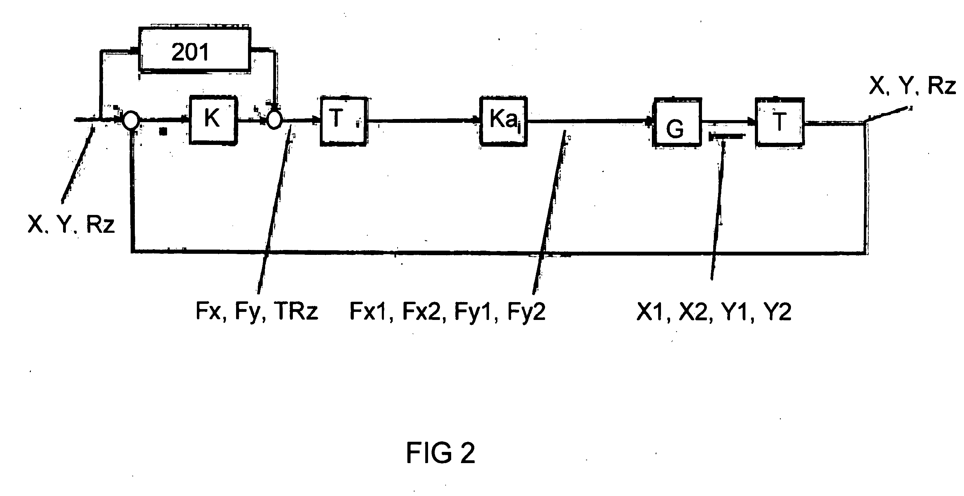

Fig. 2 shows a control of XY-T positions by a decentralized control scheme, according to an embodiment of the invention. Feed forward is a diagonal 3x3 matrix with acceleration and position dependent terms to compensate set point acceleration and position dependent disturbance forces due to linear encoder mechanism.

Input values X, Y, Rz are combined with feedback values X, Y, Rz and provided to a diagonal controller K. The input values X, Y, Rz are further provided to a feedforward means 201. An output of the feedforward means 201 and the diagonal controller K are combined to values Fx, Fy, TRz and provided to an actuator matrix (4x3) T. Output values of the actuator matrix T are provided to an amplifier Ka. Output values Fx1, Fx2, Fy1, Fy2 of the amplifier Ka are provided to a mechanical plant (3x4) G. Output values X1, X2, Y1, Y2 of the mechanical plant G are provided to a sensor matrix (3x3) T which outputs the feedback values X, Y, Rz. The actuator matrix T, the amplifier Ka, the mechanical plant G and the sensor matrix T form a plant to be controlled (approximately diagonal 3x3).

Since the linear actuators and position sensors do not have a one to one relation, the controller has to deal with these interactions. The control scheme of Fig. 2 can be used to statically decouple the positions and forces. Set points are given in world coordinates (x,y, T). This type of control scheme is called a decentralised controller. The advantage of using the sensor and actuator decoupling matrices is that standard single axis controllers can be applied dealing with the dynamics (diagonal controller). A very fast digital motion controller can be used. For example a NyCe 4000 motion controller uses a 4000 Hz sample frequency to obtain the required 100 Hz bandwidth. In particular, the NyCe 4000 motion controller for semiconductor application uses multiple input and output controller at 4000 Hz. The coordinate transfer functions can be implemented as an application layer in this digital controller. To meet the settling time requirements acceleration feed forward and force compensation can be used. Most of the static forces are generated by the double leaf spring encoder mechanism and the cables and hoses. These are cancelled by the position dependent feed forward controls

When the master is aligned to the wafer the ECPR process is performed. For that purpose the chuck with the master is locked by vacuum to the granite stone. The stage controls need to guarantee an accurate positioning to the granite. For this purpose the flight height of the stage created by the air bearing is first lowered to a minimum value (3 µm). By setting the pressure and vacuum as set points to the pneumatic PID controllers the chuck is lowered and locked to the granite. In order to avoid damage to the granite surface and to secure the positioning of the chuck several control modes in the NyCe4000 controller can be used. During this lockdown the integrator value is fixed to a constant force, to compensate the force from cables and hoses. Although this process is complex and a solution was found experimentally, we have been able to achieve less than 50 nm repeatability for this process.

Control modes concern the landing and rising of the airbearing. During landing, for a specific height, which is related to supplied pressure and vacuum to the airbearing, the integrator output is held constant. So the static forces, from leaf springs and hoses, are compensated, but the integrator action is switched off. This is done to prevent scratching of the airbearing over the granite due to small errors.

By moving the stage, the leaf springs are elastic deformed, which causes forces in both X and Y direction and a torque in Theta. All in the center of gravity of the stage. By moving the stage, also the cables for the ECPR process are elastic deformed, which causes forces in both X and Y direction and a torque in Theta. All in the center of gravity of the stage.

These forces and torque are stage position dependent. So, when the stage is locked to the granite, these forces and torque will not change and the integrator actions can be limited. However, the constant forces and torque provided by the integrators should be kept at a constant level.

The method steps stated in the embodiments described may also be executed in a different order. In addition, individual method steps of the embodiment described here may be omitted or modified in alternative versions of the invention.

### Reference signs

- 101: setpoints
- 103: sensor signals
- 105: position signals
- 107: method step
- 109: current position
- 111: predefined position
- 113: error signals
- 115: Controllers
- 117: feed forward means
- 119: error signals
- 121: method step
- 123: desired current signals
- 125: amplifier
- 127: actuator signals
- 129: actuators
- 131: forces
- 133: stage
- 135: stage position, velocity, acceleration and jerk
- 137: predefined position
- 201: feed forward means

## Claims

1. Method for aligning a stage in an Electro Chemical Pattern Reproduction (ECPR) process, comprising the steps of:
receiving sensor signals (103) via an interface, wherein the sensor signals represent a current position of the stage (133) in sensor coordinates;
providing a predefined position (111) of a center of gravity of the stage;
determining a current position (109) of the center of gravity of the stage, based on the sensor signals;
comparing the predefined position and the current position of the center of gravity to determine error signals (113), wherein the error signals define a deviation between the predefined position and the current position;
determining actuator signals (127), based on a transformation of the error signals into actuator coordinates, wherein the actuator signals are suitable to actuate actuators (129) of the stage such that the center of gravity of the stage moves to the predefined position (137); and
providing the actuator signals at an interface to the actuators.

2. Method according to claim 1, wherein the sensor signals (103) are provided by four sensors, each sensor being arranged at a different edge of the stage (133).

3. Method according to one of the previous claims, wherein the sensor coordinates are Cartesian coordinates.

4. Method according to one of the previous claims, comprising a step of providing a predefined position setpoint, a predefined velocity setpoint, a predefined acceleration setpoint and a predefined jerk setponit (111), and wherein the error signals (113) are combined with the position setpoint.

5. Method according to one of the previous claims, wherein the error signals (119) are further determined by using three independent Proportional Integrated/Derivated (PID) Controllers (115).

6. Method according to one of the previous claims, wherein the actuator signals (127) are provided to four actuators (129), each actuator being arranged at a different edge of the stage (133).

7. Method according to one of the previous claims, wherein the actuator coordinates are Cartesian coordinates.

8. Method according to one of the previous claims, wherein the actuator signals (127) comprise currents for actuating the actuators (129).

9. Method according to one of the previous claims, wherein the sensors and actuators are arranged within a single plane.

10. Control device for aligning a stage in an Electro Chemical Pattern Reproduction (ECPR) process, comprising:
an input interface for receiving sensor signals (103), wherein the sensor signals represent a current position of the stage (133) in sensor coordinates;
means for providing a predefined position (111) of a center of gravity of the stage;
means for determining a current position (109) of the center of gravity of the stage, based on the sensor signals;
means for comparing the predefined position and the current position of the center of gravity to determine error signals (113), wherein the error signals define a difference between the predefined position and the current position;
means for determining actuator signals (127), based on a transformation of the error signals into actuator coordinates, wherein the actuator signals are suitable to actuate actuators (129) of the stage such that the center of gravity of the stage moves to the predefined position (137); and
an output interface for providing the actuator signals to the actuators.

11. Control device according to claim 10, wherein the means for comparing comprises notch filters to further determine the error signals (113).

12. Control device according to claim 10 or 11, comprising a plurality of control modes and means for control mode switching during and before landing of the stage.

13. Control device according to one of claims 10 to 12, comprising feedforward compensation means being configured to compensate static forces, from leaf springs and hoses.

14. An Electro Chemical Pattern Reproduction system, comprising:
a stage (133) for carrying a master of the Electro Chemical Pattern Reproduction system;
four sensors, each sensor being arranged at a different edge of the stage, the sensors being configured to provide sensor signals (103) representing a current position of the stage in sensor coordinates;
four actuators (129), each actuator being arranged at a different edge of the stage, the actuators being configured to receive actuator signals (127) and to move the stage based on the actuator signals; and
a control device according to claim 10, the control device being configured to receive the sensor signals and to provide the actuator signals.
